Europäisches Patentamt

European Patent Office

Office européen des brevets

(11) Publication number: **0 126 629**
**A2**

## (12) EUROPEAN PATENT APPLICATION

(21) Application number: **84303368.9**

(22) Date of filing: **17.05.84**

(51) Int. Cl.³: **G 04 B 37/16,** G 04 B 47/02,
G 04 B 37/08

(30) Priority: **17.05.83 GB 8313658**

(43) Date of publication of application: **28.11.84**
**Bulletin 84/48**

(84) Designated Contracting States: **BE DE FR GB IT NL SE**

(71) Applicant: **SINCLAIR RESEARCH LIMITED, 25 Willis Road, Cambridge CB1 2AQ (GB)**

(72) Inventor: **Aksnes, Dagfinn, Test View Cottage Longstock, Stockbridge Hampshire, S020 6DP (GB)**

(74) Representative: **Carpmael, John William Maurice et al, CARPMAELS & RANSFORD 43 Bloomsbury Square, London, WC1A 2RA (GB)**

(54) Strap assembly.

(57) A strap assembly for connecting a strap (3) to a housing (41), e.g. for a wristwatch/radio, wherein the housing has a body (47) and a back (45) and wherein a hinge (61) connected to the strap (3) is connected to the housing (41) by providing an open ended recess or slot (57) which receives the end portions of the hinge (61). Preferably, the slots (47) are provided just in the body (47) and are of a depth greater than the diameter of the hinge (61) and depending projections (87) on the back (45) hold the hinge (61) in position when the back is assembled with the body. A further most important feature of the invention is the provision of a special construction of hinge pin (61) which allows an electrical conductor (4) in the strap (3) to be led into the housing (41) through the neutral axis of the hinge pin (61) so that there is minimal flexing of the conductor (4) when the strap (3) is pivoted relative to the housing (41). For this purpose the hinge pin (61) is provided with a first offset portion (69) and further offset end portions (59), the actual hinge portions which connect the pin to the strap (3) being shown at 63.

## STRAP ASSEMBLY

This invention relates to a strap assembly for connecting a flexible strap to a housing, such as would be used for an electronic or electrical device which can be worn on the human body. While it is envisaged that the invention could be applicable to a body belt, or a leg mounted device, such as worn by pilots or perhaps divers, it is particularly designed for wrist mounted devices and especially combined watch/radio receivers, but could have many other uses.

According to the broadest aspect of the present invention, we provide a strap assembly for connecting a strap to a housing; wherein the housing is of two part construction with at least one slot located at the junction of the two parts to receive a hinge which is connected to said strap, said hinge being held in its operative position when said two housing parts are assembled together.

Preferably, the hinge is provided by a pin connected to the strap, with the ends of the pin each being located in a slot.

Preferably, the or each slot is provided in one housing part only. The or each slot may be deeper than the diameter of the hinge, e.g. of the end portions of the hinge pin, in which case, co-operating projection(s) may be provided on the other housing part, which locate(s) in the slot(s), and bear(s) against hinge, e.g. the end portions of the hinge-pin when the two parts are assembled.

The present invention has been specifically designed for connecting a watch strap to a watch housing or casing, but it is equally useful for any strap mounted electrical or electronic device (hereinafter called electronic device), especially those which need a source of power. In some cases, it is advantageous to keep the power source spaced from other component parts, and in the case of a wrist mounted radio receiver, space in the watch and radio housing(s) is at a premium. Hence, two or more component housings may be required, at least some of which may be pivotally connected together. There could for example be one for the receiver/tuning mechanism, one for the loudspeaker and a third for the watch mechanism, and it is also desirable to have another for the power source.

In fact, we prefer to mount the power source, e.g. a battery, in a clasp for the strap assembly, and in another co-pending patent application which also claims priority from our U.K. Patent Application No. 8313658 there are claims directed to this construction.

Obviously, with the above described arrangement, the power from the power source will have to be transmitted through the strap to the component parts of the electronic device, and care will have to be taken to ensure a good electrical connection from the strap to the component parts, which can be flexed many times, without failure occurring, and yet a strong mechanical connection must also be achieved. The present invention provides a solution to these problems.

Also according to the present invention, therefore, we provide a strap assembly for connecting a strap incorporating an electrical conductor to a housing for a component of an electronic device, e.g. which is capable of being carried on a human body; said assembly including a strap part with an electrical conductor running therethrough and having a hinge connected thereto, a component housing with which said hinge is engaged, so as to provide a pivotal connection between the strap part and the housing, and wherein said hinge is so constructed as to allow passage of the conductor at least substantially through the pivot axis of the hinge so as to minimise flexing thereof when pivoting between the strap part and housing occurs.

Preferably, the hinge is provided by a hinge pin having an offset portion therein.

The strap portion may terminate in a bulbous end portion, of generally circular cross section, and there is preferably an aperture running centrally therethrough, to accommodate the hinge pin.

Preferably, the offset portion is located centrally of the hinge pin and two bulbous end portions are provided on the strap part, one at each side edge, the offset portion being formed by two pairs of 90° kinks in the pin which give the pin a stirrup shape at its centre which allows the conductor to pass through the line of pivoting between the strap part and hinge pin.

This means that the conductor in the strip passes through the neutral plane of flexure at the hinge pin. i.e. there is minimal flexing movement and strain of the conductor at the hinge pin.

Preferably also, the end portions of the hinge pin are used to connect the strap to the housing, and for this purpose, engage in recesses in the end of the housing. Preferably, the recesses are open ended slots formed in one part of a two part housing, as described above. Preferably, in order to give sufficient strength at the point where the hinge pin engages with the housing, by allowing there to be sufficient housing material between the recesses and outside of the housing, the hinge pin at each of its ends is offset relative to that part i.e. the hinge portion which is located in the bulbous end portions of the strap.

Preferably, these offset portions are obtained by providing two further pairs of 90° kinks in the hinge pin, one pair at each end, these kinks being so arranged that the offset end portions are located in a different plane to the central offset or stirrup shaped portion.

In order to simplify manufacture and assembly of the housing, and of the strap assembly, it is preferred that the housing is formed from several component parts, and comprises a die cast or moulded body, e.g. of zinc alloy or plastics material, with a stamped, pressed, or punched back. Preferably, a gasket is located between the back and body, and the parts are preferably held together by a plurality of screws or studs which may be of the self tapping variety.

Preferably, therefore, the housing body incorporates a compartment for components, one wall of which has a slot therein for passage of the conductor leading from the strap part, and on the side of the wall remote from the compartment, a portion of the housing is cut away to receive the end of the strap and hinge pin, the hinge pin itself being located in slots opening towards the rear face of the housing and extending almost the full depth of the housing, there being a pair of depending lugs or projections on the back which engage in the slots to trap the offset end portions of the hinge pin in the bottom of the slot when the body and back are assembled together.

Preferably, also, the gasket has a depending portion thereon which locates in the slot in the said one wall of the compartment to form a seal with one face of the conductor. There may be a further gasket strip which forms a further seal with the base of the slot and other face of the conductor, the gasket and gasket strip also providing a strain relief for the conductor.

The various aspects of the present invention are now described, by way of example only, with reference to the accompanying drawings all showing parts of a strap assembly for a wrist mounted watch/radio, in which:-

Figure 1 is a longitudinal part section through part of a strap assembly, showing one end of a strap part connected to an assembled component housing for the watch/radio.

Figure 2 is an exploded perspective view to a smaller scale than Figure 2, of the assembly shown in Figure 1, and

Figures 3a and 3b are a front elevation and a side elevation, respectively, of the hinge pin used to connect the strap part to the housing in the assembly of Figures 1 and 2.

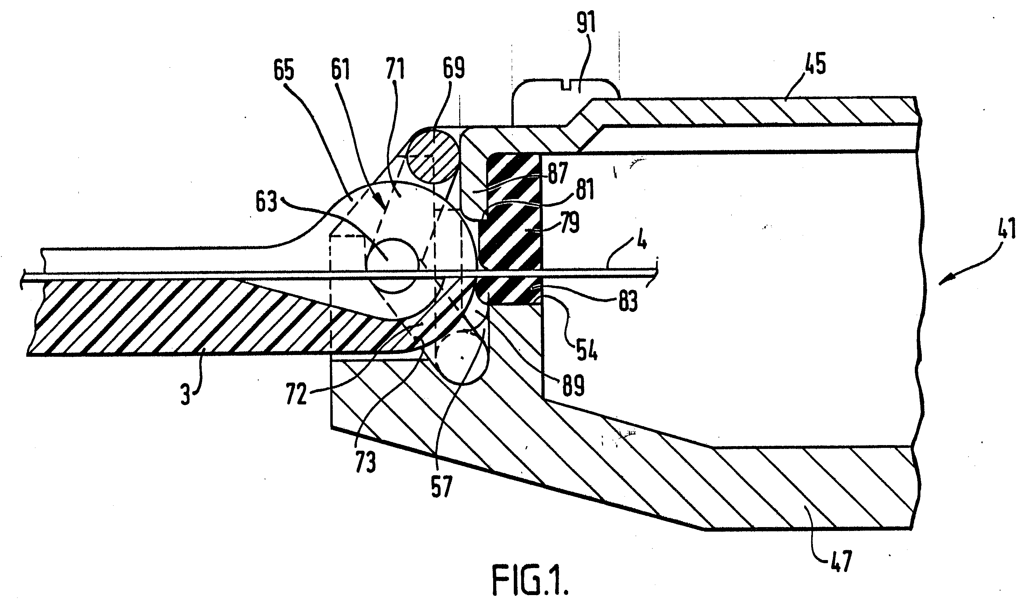

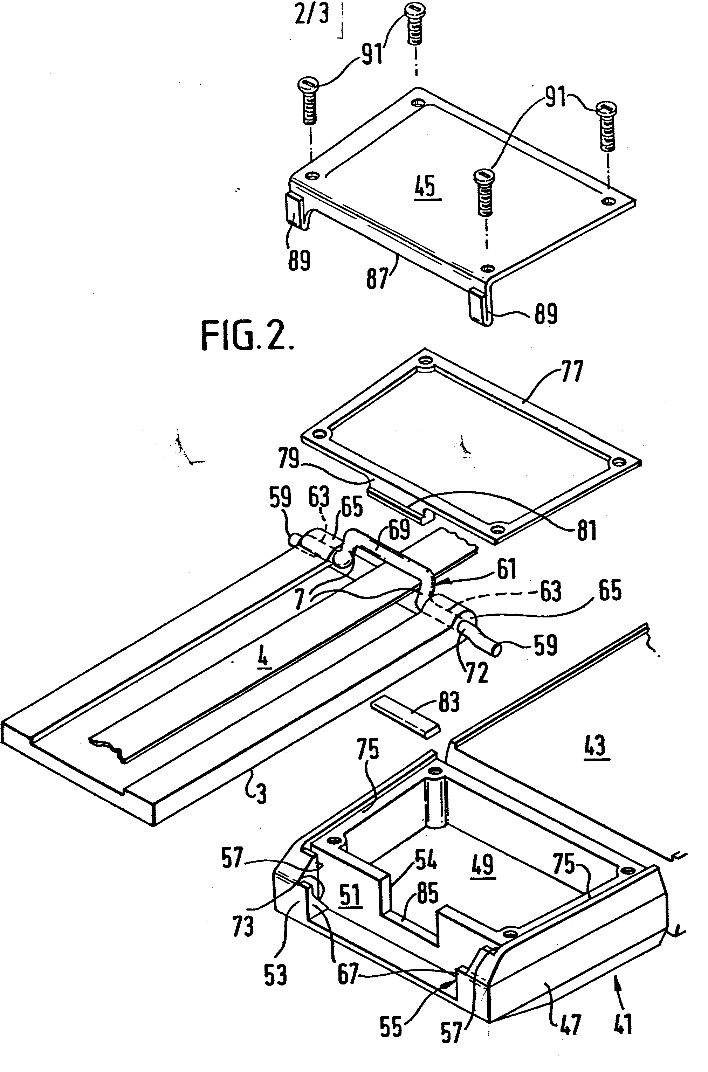

Referring first to Figure 1, one end of a strap part is shown at 3, and a flexible printed circuit board having conductors thereon, including a conductor 4 (see also Figure 2), which forms a loop aerial extends through the strap part 3.

The strap itself is preferably formed of a modified polyurethane material having the trade name QUINN, which has the feel and recovery characteristics of leather, and yet it can be mass produced, and heat sealed, which is particularly useful and enables the conductor(s) to be located therein with ease. For the purpose, the strap is preferably formed in two parts, with a slot in one face of one part, into which the flexible circuit board is located, the second part, which is in the form of a strip then being inserted into the slot over the flexible circuit board, and being heat sealed permanently in place, it being of a width such that it is invisible after the heat sealing operation.

The strap part 3 is shown in Figure 1 connected to a housing 41 for a component part e.g. a tuner of a wrist watch/radio receiver. An adjacent housing for another component part e.g. a loudspeaker, is shown at 43, (see Figure 2) and is pivotally or otherwise connected to housing 41, e.g. through a piano type hinge (not shown), which could, for example, be integral with or secured to the backs for the two housings, one of which is shown at 45.

The housing 41 has a body 47 with a generally rectangular compartment 49 therein, one of its walls 51 having a slot 54 in it for the passage of the ribbon like conductor 4 (which is embedded in, and projects from the end of strap part 3). The conductor 4 could either be to take power from a remote battery housing e.g. in a strap clasp, or it could comprise the aerial to the radio receiver. Alternatively, there could be two conductors in parallel, for both the above purposes. The end wall 53 of the housing body 47 is cut away at 55 to receive the end of strap part 3, there being two slots 57, one on each side of the body 47, to receive end portions 59 of a hinge pin 61 to connect the strap part 3 to the housing 41.

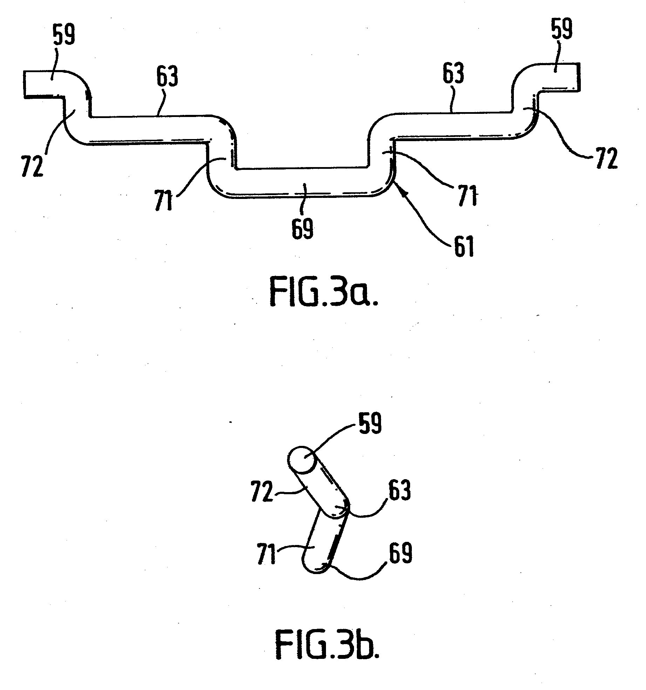

As can be seen from Figures 3a and 3b, hinge pin 61 has two main hinge portions 63 which are journalled in bulbous end portions 65 of strap part 3, which in turn are designed to lie between side walls 67 of cut out 55. So that the conductor ribbon 4 can pass into housing body 47 without having to flex around the hinge pin 61, i.e. it passes through the neutral plane of flexing, the hinge pin 61 has an offset central portion 69, giving it a stirrup shape, which allows ribbon 41 to pass into the body 41 in line with the pivot point of the strap part, thus ensuring minimum flexing of the ribbon when the strap is articulated relative to housing 47. Offset portion 69 is connected to hinge portions 63 by two arms 71, each extending at 90° to portions 63,69.

It will also be noted that each end portion 59 of the hinge pin 61 is offset relative to the main hinge portion 63, and connected thereto by leg portions 72, each extending at 90° to portions 59 and 63. When assembled these leg portions 72 rest against inclined walls 73 leading down to the bottom of slots 57 in body 47. This second offset means that a strong mechanical connection of the strap part to the housing body 47 can be achieved, as it permits a large thickness of material at the end wall 53 to hold the end portions 59 of the hinge pin.

The housing body is preferably formed of die cast zinc alloy, and has a recess 75 in its rear face deep enough to receive a sealing gasket 77 and the back 45. The gasket 77 has a depending portion 79 with a step 81 formed therein, the lower edge of depending portion 79, when assembled, being arranged to bear against and form a seal with the top face of the ribbon 41. A further gasket strip 83 forms a seal between underside of ribbon 41 and wall 85 of slot 54. Together, gasket strip 83 and depending gasket portion 79 also provide a strain relief for ribbon 4.

To complete the strap/housing assembly, back 45 which is preferably stamped or punched from stainless steel plate, is located in recess 75 over gasket 77, with turned down edge portion 87 resting on the strap 81 to apply pressure to the portion 79. At each of its ends, the edge portion 87 is extended to provide two depending lugs 89, the ends of which are turned through 180° to provide rounded edges, and when assembled with body 47, these lugs will lie in the slots 57, with the rounded bottom edges resting on hinge pin end portions 59 to hold them in the bottom of the slots 57. The back is held in place by four screws or studs 91, which may be of the self tapping variety. Obviously, however, other methods could be used, but the above described method is easy to manufacture and assembly.

In the above description, an "offset" hinge pin 61 has been described, the end portions 59 of which are located in slots 57 which are considerably deeper than the diameter of the end portions 59.

In a modified construction, only the stirrup shaped central offset portion need be offset relative to end portions of the hinge pin, for passage of the conductor 4, in which cases recesses for the end portions of the hinge pin need not be so deep. It is envisaged for example, that they could have a depth equal to the diameter of the end portions of the hinge pin, in which case the lugs 89 would be unnecessary.

It is even envisaged that the recesses for the end portions of the hinge pin could be formed partly in one housing part, e.g. housing 41, and partly in the other housing part, e.g. back 45.

The advantage of these constructions is that a one piece hinge pin can be provided, which is less expensive to manufacture, and may be stronger, than the traditional sprung telescopic hinge pins, and it is a very simple operation to insert the hinge pin during assembly, and very easy to form the recess(es) during manufacture of the housing parts.

It is even envisaged that it would be possible to arrange for the conductor 4 to pass through the pivoting axis of the hinge connecting the strap 3 to the housing by forming a bulbous hinge, of a cross section similar to strap end portions 65, integral with the strap, which could have a part cut away to avoid flexure of conductor 4, and which could be located directly within a recess in the housing part(s).

Of course, the constructions of hinge described above, due to their ease of manufacture and assembly could be used to advantage wherever a strap is to be pivotally connected to a housing, regardless of whether the housing is for a watch or the like, and regardless of whether or not the strap incorporates a conductor therein.

- 9 -

    It will of course be understood that the present
invention has been described above purely by way of
example, and modifications of detail can be made
within the scope and spirit of the invention.

0126629

-10-

CLAIMS;-

1. A strap assembly for connecting a strap (3) to a housing (41); wherein the housing (41) is of two part construction (45,47) characterised in that at least one slot (57) is located at the junction of the two housing parts (45,47) to receive a hinge (61) which is connected to said strap (3), said hinge (61) being held in its operative position when said two housing parts (45,47) are assembled together.

2. A strap assembly according to claim 1, characterised in that the hinge (61) is provided by a pin (61) connected to the strap (3), with the ends (59) of the pin (61) each being located in a slot (57).

3. A strap assembly according to claim 1 or 2, characterised in that the or each slot (57) is provided in one housing part (47) only.

4. A strap assembly according to any one of claims 1 to 3, characterised in that the or each slot (57) is deeper than the diameter of the hinge (61), and in that for the or each slot a co-operating projection (89) is provided on the other housing part (45), which locates in the respective slot (57), and bears against the hinge (61), when the two parts (45,47) are assembled.

5. A strap assembly for connecting a strap (3) incorporating an electrical conductor (4) to a housing (41) for a component of an electronic device, said assembly including the strap part (3) with the electrical conductor (4) running therethrough and having a hinge connected thereto (61), a component housing (41) with which said hinge (61) is engaged, so as to provide a pivotal connection between the strap part (3) and the housing (41), characterised in that said hinge (61) is so constructed as to allow passage of the conductor (4)

-11-

at least substantially through the pivot axis (63) of the hinge (61) so as to minimise flexing thereof when pivoting between the strap part (3) and housing (41) occurs.

6. A strap assembly according to claim 5, characterised in that the hinge (61) is provided by a hinge pin (61) having an offset portion (69) therein.

7. A strap assembly according to claim 5 or 6 characterised in that the strap (3) terminates in a bulbous end portion (65), of generally circular cross section, with an aperture running centrally therethrough, to accommodate the hinge pin (61).

8. A strap assembly according to claim 6 or claim 7 when dependent on claim 6, characterised in that the offset portion (69) is located centrally of the hinge pin (61) and in that two bulbous end portions (65) are provided on the strap part (3), one at each side edge, the offset portion (69) being formed by two pairs of 90° kinks defining arms (71) in the pin (61) which give the pin (61) a stirrup shape (69) at its centre which allows the conductor (4) to pass through the line of pivoting (63) between the strap part (4) and hinge pin (61).

9. A strap assembly according to claim 8, characterised in that the end portions (59) of the hinge pin (61) are used to connect the strap (3) to the housing (41), and engage in recesses (57) in the end of at least one of the housing parts (45 or 47).

10. A strap assembly according to claim 9, characterised in that the recesses (57) are open ended slots (57) formed in one part (47) of a two part housing.

11. A strap assembly according to claim 8, 9, or 10, characterised in that, the hinge pin (61) at each of its ends (59) is offset at (72) relative to the hinge portion (63) which is located in the bulbous end portions (65) of the strap (3).

0126629

-12-

12. A strap assembly according to claim 11, characterised in that the offset portions (59) are obtained by providing two further pairs of 90° kinks (72) in the hinge pin (61), one pair at each end, these kinks (72) being so arranged that the offset end portions (59) are located in a different plane from the central offset or stirrup shaped portion (69).

13. A strap assembly according to claims 2 and 12 characterised in that the housing (41) has a body (47) and a back (45) and in that the housing body (47) incorporates a compartment (49) for components, one wall (51) of which has a slot (85) therein for passage of the conductor (4) leading from the strap part (3), and on the side of the wall (51) remote from the compartment (49), a portion of the housing body (47) is cut away (at 55) to receive the end of the strap (3,65) and hinge pin (61), the hinge pin (61) itself being located in slots (57) opening towards the rear face of the housing which receives the back plate (45) and extending almost the full depth of the housing, there being a pair of depending lugs or projections (89) on the back (45) which engage in the slots (57) to trap the offset end portions (59) of the hinge pin (61) in the bottom of the slots (57) when the body (47) and back (45) are assembled together.

14. A strap assembly according to claim 13 characterised in that a gasket (77) is located between the back (45) and the body (47), the gasket (77) having a depending portion (79) thereon which locates in the slot (85) in the said one wall (51) of the compartment to form a seal with one face of the conductor (4).

15. A strap assembly according to claim 14 characterised in that a further gasket strip (83) which forms a further seal with the base of the slot (85) and other face of the conductor is provided, the gasket (77) and gasket strip (83) also providing a strain relief for the conductor (4).

FIG.1.

0126629

2/3

FIG.2.

FIG.3a.

FIG.3b.